# EUROPÄISCHE PATENTSCHRIFT

(11) **EP 1 674 672 B1**
(45) Veröffentlichungstag und Bekanntmachung des Hinweises auf die Patenterteilung: **13.10.2010**
(21) Anmeldenummer: 04030795.1
(22) Anmeldetag: 27.12.2004
(51) Int. Cl.: F01L 1/14, F01L 1/18

(54) **Variable Ventilsteuerungseinrichtung**
Control system for a variable valve actuating device
Système de commande pour distribution variable de soupape

(43) Veröffentlichungstag der Anmeldung: 28.06.2006
(73) Patentinhaber: Caterpillar Motoren GmbH & Co., 24159 Kiel (DE)
(72) Erfinder: Schlemmer-Kelling, Udo, 24113 Schulensee (DE); Nagel, Jürgen, 24214 Gettorf (DE)
(74) Vertreter: Klang, Alexander H.

(56) Entgegenhaltungen:
- EP-A- 1 031 705
- WO-A-2004/005677
- WO-A-2004/088094
- US-A1- 2003 164 163

## Beschreibung

Die Erfindung bezieht sich auf eine variable Ventilsteuerung nach dem Oberbegriff des Patentanspruches 1.

Es ist bekannt, bei der NOx Minderung für Diesel- und Gasmotoren das bekannte Verfahren nach Miller zur Abkühlung der Verbrennungstemperatur einzusetzen. Hierbei wird ein Kühleffekt durch ein sehr frühes Schließen der Einlaßventile erreicht. Eine anschließende Expansion der Gasmenge im Brennraum senkt die Frischgastemperatur und der Füllungsverlust des aufgeladenen Motors wird durch einen Turbolader mit einem erhöhten Ladedruck ausgeglichen.

Für transiente Motorzustände, bei denen der aufgeladene Motor in kurzer Zeit eine höhere Leistung/Drehmoment abgeben muß, ist das Ausschalten des Miller Effekts sehr hilfreich. Dies kann auf der einen Seite durch ein Verschieben des Einlaßnockenprofils durch Verdrehung der Nockenwelle gegenüber der Kurbelwelle oder durch eine Verschiebung des Nockens auf der Nockenwelle oder durch eine Veränderung der Anlenkung Nocken/Ventil erreicht werden. In allen Fällen wird durch die Verschiebung des Nockenprofils eine Ventilüberschneidung und damit einen Spülung der Zylinder verringert.

Nach der DE 37 37 820 A1 ist es bereits bekannt ein in Abhängigkeit von der Kolbenbewegung gesteuertes Einlaßventil auszubilden, wobei der Einlaßkanal mit einem Speicherraum verbunden ist, der von einem Lader gespeist wird und zwischen Speicher und Einlaßkanal ein Luftsteuerventil angeordnet ist, das sich in Abhängigkeit von der Zündfrequenz der zugeordneten Verbrennungsräume öffnet und schließt.

Hierbei ist vorgesehen, daß das Luftsteuerventil vor dem zugeordneten Einlaßventil schließbar ist und bei geöffnetem Einlaßventil unverdichtete Ladung in den Verbrennungsraum gesaugt wird, sobald der Druck im Verbrennungsraum den Außendruck unterschreitet.

Auch nach der SE 02 02 124 ist das Einlaßventil über eine Steueranordnung zusätzlich variabel steuerbar.

Das Dokument JP09004464 offenbart einen Motor, der einen Ventiltrieb mit Kipphebeln, Stossstangen und Ventilbrücken aufweist.

Aufgabe der Erfindung ist es, eine variable Ventilsteuerung für Einlaß- oder Auslaßventile einer Brennkraftmaschine zu schaffen, um eine Verringerung von Rußemissionen und eine Verbesserung einer Lastaufnahme eines Gas- oder Dieselmotors zu gewährleisten.

Diese Aufgabe wird erfindungsgemäß durch die Merkmale des Patentanspruchs 1 gelöst.

Hierdurch wird z. B. vermieden, daß ein frühes Schließen des Auslaßventils zu einem schlechten Spülen des Brennraumes führt und die Brenngase nach Abschluß der Verbrennung nicht vollständig ausgeschoben werden. Es hat sich gezeigt, daß ein verzögertes Schließen eine bessere Abgasrückführung mit einem höheren Anteil von Restgasen ermöglicht und damit die NOx-Emmission senkbar ist.

Weitere vorteilhafte Ausbildungen sind durch die Merkmale der Unteransprüche gekennzeichnet.

Die mit der Erfindung hauptsächlich erzielten Vorteile bestehen darin, daß durch eine Einrichtung der Schließvorgang der Gaswechselventile entsprechend der Steuerung einer zuschaltbaren Ventileineinheit, wie beispielsweise durch eine Drossel oder durch ein getaktetes Magnet-Absperrventil, verzögerbar ist. Die Verzögerung des Schließvorgangs wird dadurch erreicht, daß ein Ventilkipphebel mit einer Verzögerungseinrichtung einerseits über eine Ventilbetätigungsbrücke und andererseits unmittelbar mit einer spielausgleichenden Teleskopeinrichtung an der Stoßstange verbunden ist und die Verzögerungseinrichtung zwei Flügelkammern im Kipphebel sowie einen darin schwenkbar gelagerten Flügel der mit einer ortsfesten Kipphebellagerung verbunden ist und die Schmieröl aufnehmenden Flügelkammern in der Einrichtung über ölführende Verbindungsleitungen mit Ventileinheiten beim Öffnungs- und Schließvorgang der Gaswechselventile verbunden sind.

Zur Erzielung des verzögerten Schließvorgangs der Gaswechselventile sind zwischen endseitigen Flügeln am Kipphebellagerbolzen und der entsprechenden Ausnehmungen am Kipphebel die Flügelkammern angeordnet, welche über eine Bohrung im Flügel mit einer vertikalen Bohrung im Kipphebelbock verbunden ist, in welcher endseitig eine Anstichbohrung einmündet, die über Leitungen mit den Ventileinheiten verbindbar sind. Insbesondere ist vorgesehen, daß die Anstichbohrung in Abhängigkeit von der Ventilstellung der Gaswechselventile über eine Leitung entweder mit der einen Ventileinheit, bestehend aus einem Durchgangs- und Absperrventil, oder über eine weitere Leitung mit der weiteren Ventileinheit, bestehend aus einem Rückschlagventil und einer Drossel oder ein getaktetes Magnet-Absperrventil zu einem Schmierölanschluß verbindbar ist. Somit kann über die Ventileinheiten mit den entsprechend ausgestalteten Ventilen eine Steuerung der Gaswechselventile in Abhängigkeit von der Schließstellung und/oder der Öffnungsstellung erzielt werden.

So ist bei einem Schließvorgang der Gaswechselventile, das in den Flügelkammern eingeschlossene Schmieröl über die vertikale Bohrung im Kipphebelbock und die Anstichbohrung im Zylinderkopf sowie über eine Leitung bei geschlossenem Ventil in der Ventileinheit der Drossel oder einem getaktetem Magnet-Absperrventil in der weiteren Ventileinheit zuführbar, wobei die Einlaßventile eine Verzögerungsstellung einnehmen.

Damit die Teleskopeinrichtung ständig gegen das eine freie Ende des Kipphebels drücken kann, ist das Teleskopglied im hohlen Zylinderschaft der Stoßstange geführt und zwischen einem herausstehenden Kopf des Teleskopgliedes und einem äußeren Abstützring des Zylinderschaftes ist eine Druckfeder angeordnet. In einer Schließphase der Gaswechselventile bzw. in einer Nockenschließphase wird mit einer zeitlichen Verzögerung Schmieröl aus den Flügelkammern herausgepreßt, derart, daß die Federkräfte der Ventilfedern die Druckfeder der Teleskopeinrichtung überdrückend ausgebildet sind und die Auslaßventile einer Schließstellung zuführbar sind.

In einer nach der Schließphase der Gaswechselventile anschließenden Öffnungsphase der Gaswechselventile wird das Schmieröl über das Rückschlagventil, eine Leitung sowie über die Anstichbohrung und die axiale Bohrung der Ringkammer zugeleitet.

Ein Ausführungsbeispiel der Erfindung ist in der Zeichnung schematisch dargestellt. Es zeigen:

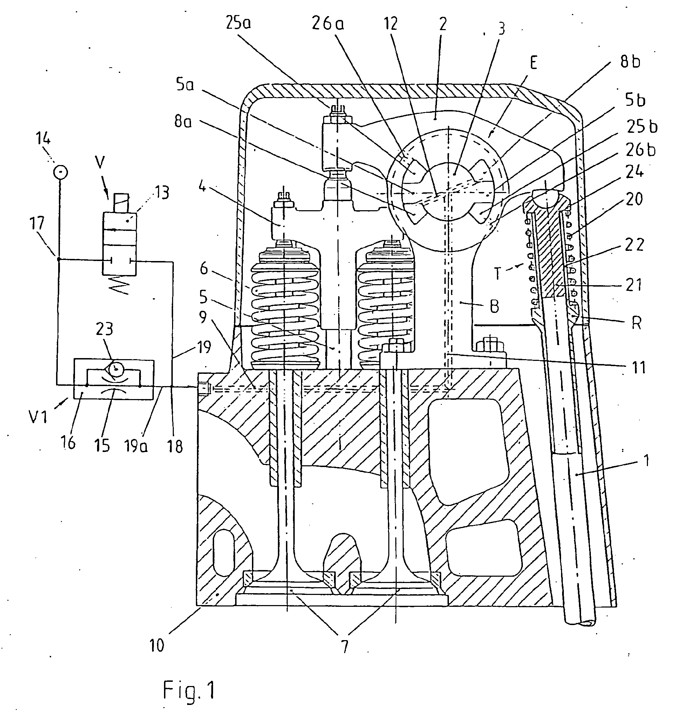

- Fig. 1: eine Schnittdarstellung der Gaswechselventile mit einer Ventilbetätigungsbrücke und einem Kipphebel mit Verzögerungseinrichtung sowie eine zuschaltbare Ventileinheit mit Drossel und Rückschlagventil,

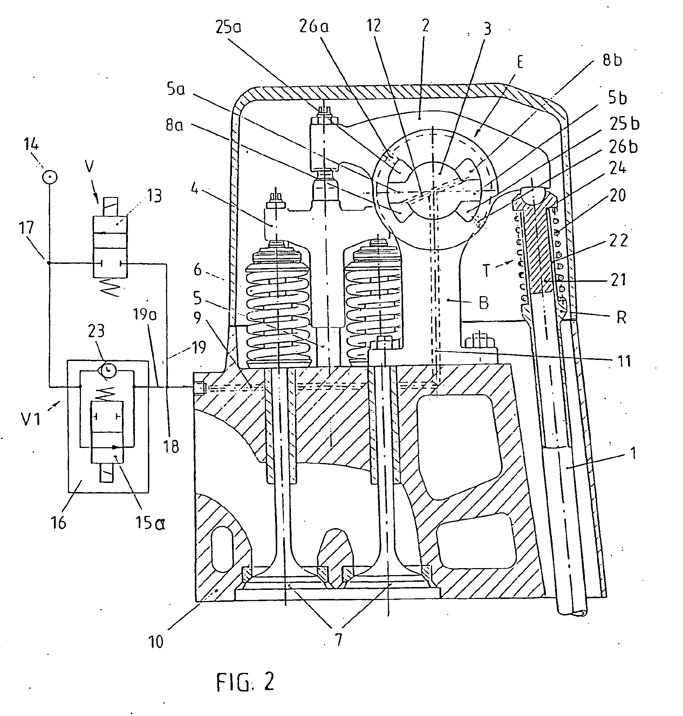

- Fig. 2: eine Darstellung gemäß Fig. 1 abweichend mit einer zuschaltbaren Ventileinheit aus getaktetem Magnet-Absperrventil und Rückschlagventil,

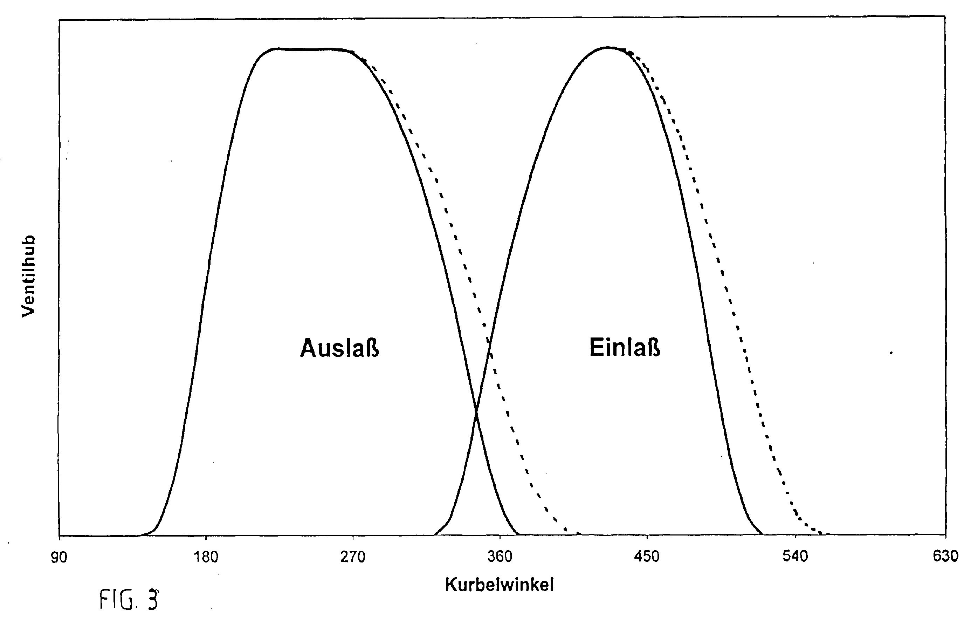

- Fig. 3: ein Diagramm des Ventilhubs über den Kurbelwinkel gemäß Fig. 1 mit einer über die Drossel gesteuerten Verzögerung,

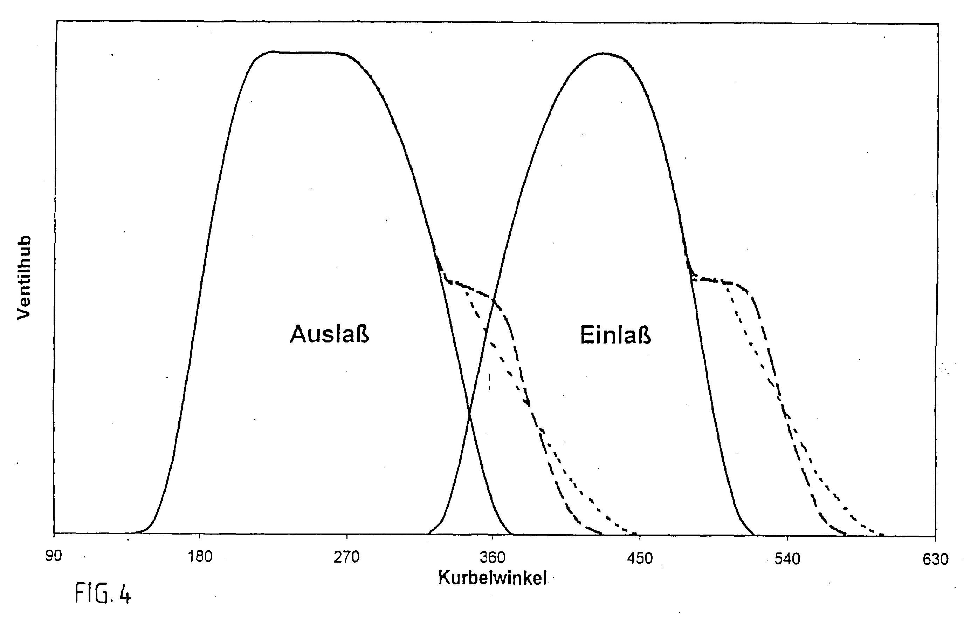

- Fig. 4: ein Diagramm des Ventilhubs über den Kurbelwinkel gemäß Fig. 2 mit einer über das getaktete Magnet-Absperrventil gesteuerten Verzögerung.

Hierbei sind Einlaßventile 7 für eine Brennkraftmaschine im Zylinderkopf 10 geführt und mit ihrem Schaftende jeweils mit einer Ventilbetätigungsbrücke 4 verbunden, der zentrisch von einem Ende eines Kipphebels 2 beaufschlagbar ist. Ein weiteres Ende dieses Kipphebels 2 ist mit einer Stoßstange 1 unter Zwischenschaltung einer sogenannten Teleskopeinrichtung T verbunden. In dem Kipphebel 2 sowie im Zylinderkopf 10 ist gemeinsam eine Verzögerungseinrichtung E mit Schmieröl aufnehmenden Flügelkammern 8a, 8b integriert, welche über ölführende Leitungen 12, 11, 9, 19, 19a mit Ventileinheiten V und V1 in Verbindung steht.

Die Verzögerungseinrichtung E umfaßt die im Kipphebel 2 integrierten Flügelkammern 8a, 8b, einen Kipphebellagerbolzen 3 mit eindseitigen Flügeln 5a, 5b und einen stirnseitigen Deckel (nicht dargestellt), der den Kipphebel 2 axial führt und die Flügelkammern 8a, 8b abdichtet.

Die Flügelkammern 8a, 8b sind mit einer Bohrung 12 im Drehflügel 5a, 5b verbunden, die über eine Vertikalbohrung 11 im Kipphebelbock B und in die Anstichbohrung 9 im Zylinderkopf 10 einmündet, die über ölführende Leitungen 19, 19a mit dem Ventilblock V und/oder V1 verbindbar sind. Das Absperrventil 13 ermöglicht eine Absperr- und eine Durchgangsstellung und verbindet somit wahlweise einen T-Anschluß 17 mit einem Schmierölanschluß 14. Die weitere Ventileinheit VI weist die Drossel 15 oder ein getaktetes Magnet-Absperrventil 15a sowie ein Rückschlagventil 23 auf, die über einen T-Anschluß 18 an die Leitung 19 bzw. 19a und an die Anstichbohrung 9 angeschlossen sind.

Die Teleskopeinrichtung T besteht im Wesentlichen aus einem in der hohlen Stoßstange 1 geführten Teleskopglied 21 nach Art eines Stempels, das einen herausstehenden Kopf aufweist, der sich an einem Anschlag 24 der Stoßstange 1 in seiner eingefahrenen Stellung gemäß Darstellung abstützt. Zwischen diesem Kopf und einem äußeren Abstützring R der Stoßstange 1 ist eine Druckfeder 20 eingespannt, die das Teleskopglied 21 gegen den Kipphebel 2 zu drücken sucht.

Zum Öffnen der Einlaßventile 7 verdreht die über einen Ventilnocken und einen Rollenantrieb (nicht dargestellt) betätigte Stoßstange 1 den Kipphebel 2 um den Kipphebellagerbolzen 3 und schiebt die Ventilbetätigungsbrücke 4, geführt durch die Führungsstange 5 der Einrichtung E gegen die Ventilfederkräfte der Ventilfedern 6 und öffnet parallel die beiden Einlaßventile 7. Während die Schwenkbewegung des Kipphebels 2 um die Achse des Kipphebellagerbolzenz 3 erfolgt zwangsläufig eine Volumenzunahme in den Flügelkammern 8a, 8b wobei unter Druck stehendes Motorschmieröl über die Anstichbohrung 9 im Zylinderkopf 10, die Vertikalbohrung 11 im Kipphebellagerbock B und die Bohrung 12 im Flügel 5a, 5b ungedrosselt nachfließen kann, weil das Rückschlagventil 23 in Nachströmungsrichtung geöffnet ist. Die Ventilfederkräfte der Ventilfedern 6 halten eine kraftschlüssige Verbindung der Komponenten Ventile 7, Ventilbetätigungsbrücke 4, Kipphebel 2, Stoßstange 1, Rollenantrieb und Nocken.

Der Schließvorgang der Einlaßventile 7 wird eingeleitet, wenn sich der nicht näher dargestellte Rollenantrieb und die Stoßstange 1 entsprechend der nicht gezeigten Nockenkontur abwärts bewegt. Die Ventilbetätigungsbrücke 4 wird durch Federkräfte der Ventilfedern 6 aufwärts geschoben, wobei sich das Volumen in den Flügelkammern 8a, 8b des zwangsweise um die Achse des Kipphebellagerbolzens 3 schwenkenden Kipphebels 2 verringert und das in diesen Kammern befindliche Motorschmieröl über die Bohrung 12 und über die vertikale Bohrung 11 im Kipphebelblock B sowie die Anstichbohrung 9 im Zylinderkopf 10 ungedrosselt über das geöffnete Absperrventil 13 der Ventileinheit V zum Schmierölanschluß 14 entweichen kann.

Wenn dagegen das Absperrventil 13 der Ventileinheit V geschlossen ist, erfolgt während des Schließvorgangs der Einlaßventile 7 der Schmierölablauf aus den Flügelkammern 8a, 8b nicht mehr ungedrosselt über dieses Absperrventil 13, sondern über die Drossel 15 oder das getaktete Magnet-Absperrventil 15a in der Ventileinheit V1 im Drosselrückschlagventil 16, das einerseits über die T -Verbindung 17 an den Schmierölanschluß 14 und andererseits über die T-Verbindung 18 an die Verbindungsleitung 19 und die Anstichbohrung 9 angeschlossen ist. Durch die Federkräfte der Ventilfendern 6 wird die Ventilbetätigungsbrücke 4 nach oben geschoben und zwangsweise der Kipphebel 2 um die Achse des Kipphebellagerbolzenz 3 geschwenkt, wobei Schmieröl aus den Flügelkammern 8a, 8b gepreßt wird über die Bohrung 12 im Flügel 5a, 5b und die Vertikalbohrung 11 im Kipphebelbock B sowie über die Anstichbohrung 9 im Zylinderkopf 10 und wird dabei zwangsweise durch die Drossel 15 oder durch das getaktete Magnet-Absperrventil 15a im Drosselrückschlagventil 16 der Ventileinheit V1 behindert, wobei die Schwenkbewegung des Kipphebels 2 und zwangsweise die Bewegung der Ventilbetätigungsbrücke 4 und damit ebenfalls der Schließvorgang der Einlaßventile 7 entsprechend des Drosselquerschnitts der Drossel 15 oder entsprechend der Absperrzeitspanne des getakteten Magnet-Absperrventils 15a verzögert wird.

Da jetzt keine kraftschlüssige Verbindung zu der durch die Nockenkurve abwärts gehende Stoßstange 1 besteht, ist das in die Stoßstange 1 integrierte mit einer Feder 20 belastete Teleskopglied 21 vorgesehen. Die gegenüber den Ventilfedern 6 deutlich schwächere Feder 20 gleicht während der verzögerten Einlaßventilschließphase das Spiel zwischen Kipphebel 2 und Stoßstange 1 aus, wobei sich das Teleskopglied 21 axial in der Stoßstangenführung 22 verschieben kann.

Während der Nockenschließphase gelangt zeitlich gestreckt über die Drossel 15 oder über das getaktete Magnet-Absperrventil 15a der Ventileinheit V1 Motorschmieröl aus den Flügelkammern 8a, 8b, so daß die Federkräfte der Ventilfedern 6 den eindeutigen Schließzustand der Einlaßventile 7 herstellen können und dabei das Teleskopglied 21 den Anschlag 24 der Stoßstangenführung 22 erreicht, bevor der nachfolgende Öffnungsvorgang der Ventile 7 eingeleitet wird. Bei dem Öffnungsvorgang der Einlaßventile 7 ist die Drossel 15 oder das getaktete Magnet-Absperrventil 15a unwirksam, da sich das Schmieröl ungedrosselt über das in Strömungsrichtung öffnende Rückschlagventil 23 über die Anstichbohrung 9 sowie über die vertikale Bohrung 11 im Kipphebelbock B und die Bohrung 12 im Drehflügel 5a, 5b in die Fügelkammern 8a, 8b begeben kann und damit der Ventilöffnungsvorgang der Hubkurve des Ventilnockens folgt. Die durch die Schwenkbewegung des Kipphebels 2 variablen Kammern 25a, 25b sind über Entlüftungsbohrungen 26a, 26b im Kipphebelbock B be- und entlüftet.

## Patentansprüche

1. Variable Ventilsteuerungseinrichtung zum verzögerten Schließen von Einlaß- oder Auslaßventilen einer Brennkraftmaschine, insbesondere für Diesel- und Gasmotoren, wobei die Ventilsteuerungseinrichtung eine über einen Ventilnocken und einen Rollenantrieb betätigte Stoßstange aufweist, die mit einem Kipphebel verbunden und um eine Drehachse verschwenkbar ist sowie mit einem Ende eine Ventilbetätigungsbrücke beaufschlagt, die mit ihren beiden freien Enden jeweils mit einem Ventilschaft eines Ventils verbunden ist, **dadurch gekennzeichnet, daß** der Kipphebel (2) eine Verzögerungseinrichtung (E) umfaßt und unmittelbar mit einer spielausgleichenden Teleskopeinrichtung (T) der Stoßstange (1) verbunden ist und die Verzögerungseinrichtung (E) aus ortsfesten Flügeln (5a, 5b) am Kipphebellagerbolzen (3) besteht, die in Schmieröl aufnehmenden Flügelkammern (8a, 8b) des schwenkbaren Kipphebels (2) angeordnet sind, die wiederum über ölführende Verbindungsleitungen (12, 11, 9, 19, 19a) mit Ventileinheiten (V, V1) entweder beim Öffnungs- und Schließvorgang der Einlaßventile (7) oder der Auslaßventile oder nur beim Schließvorgang der Einlaßventile (7) oder der Auslaßventile verbunden sind.

2. Ventilsteuerungseinrichtung nach Anspruch 1, **dadurch gekennzeichnet, daß** die Flügelkammern (8a, 8b) über eine Bohrung (12) mit einer vertikalen Bohrung (11) im Kipphebelbock (B) verbunden sind, in die endseitig eine Anstichbohrung (9) einmündet, welche über zwei Leitungen (19,19a) mit den Ventileinheiten (V, V1) verbindbar ist.

3. Ventilsteuerungseinrichtung nach Anspruch 2, **dadurch gekennzeichnet, daß** die Anstichbohrung (9) in Abhängigkeit von der Ventilstellung der Ventile (7) über die eine der beiden Leitungen (19) entweder mit der Ventileinheit (V), bestehend aus einem Durchgangs- und Absperrventil (13), oder über die andere der beiden Leitungen (19a) mit der weiteren Ventileinheit (V1), bestehend aus einem Rückschlagventil (23) und einer Drossel (15), mit einem Schmierölanschluß (14) verbindbar ist.

4. Ventilsteuerungseinrichtung nach Anspruch 2, **dadurch gekennzeichnet, daß** die Anstichbohrung (9) in Abhängigkeit von der Ventilstellung der Ventile (7) über die eine der beiden Leitungen (19) entweder mit der Ventileinheit (V), bestehend aus einem Durchgangs- und Absperrventil (13), oder über die andere der beiden Leitungen (19a) mit der weiteren Ventileinheit (V1), bestehend aus einem Rückschlagventil (23) und einem getakteten Magnet-Absperrventil (15a), mit einem Schmierölanschluß (14) verbindbar ist.

5. Ventilsteuerungseinrichtung nach Anspruch 3 oder 4, **dadurch gekennzeichnet, daß** bei dem Schließvorgang der Ventile (7), das in den Flügelkammern (8a, 8b) eingeschlossene Schmieröl über die Bohrungen (12, 11) und die Anstichbohrung (9) sowie über die andere der beiden Leitungen (19a) bei geschlossenem Ventil (13) in der Ventileinheit (V) der Drossel (15) oder dem getakteten Magnet-Absperrventil (15a) in der weiteren Ventileinheit (VI) zugeführt wird.

6. Ventilsteuerungseinrichtung nach einem der Ansprüche 3 bis 5, **dadurch gekennzeichnet, daß** bei dem Öffnungsvorgang der Ventile (7) das Schmieröl bei geschlossenem Durchgangs- oder Absperrventil (13) in der Ventileinheit (V) über das Rückschlagventil (23) der weiteren Ventileinheit (V1), die eine der beiden Leitungen (19), die Anstichbohrung (9) und die vertikale Bohrung (11) und die Bohrung (12) den Flügelkammern (8a, 8b) der Verzögerungseinrichtung (E) zugeleitet wird.

7. Ventilsteuerungseinrichtung nach einem der Ansprüche 1 bis 6, **dadurch gekennzeichnet, daß** die Telekopeinrichtung ein federbelastetes Teleskopglied (21) umfaßt und das Teleskopglied (21) im hohlen Zylinderschaft der Stoßstange (1) geführt und zwischen einem herausstehenden Kopf des Teleskopgliedes (T) und einem äußeren Abstützring (R) des Zylinderschaftes eine Druckfeder (20) angeordnet ist.

## Claims

1. A variable valve control device for delayed closing of inlet or outlet valves of an internal combustion engine, in particular for diesel and gas engines, wherein the valve control device comprises a push rod operated via a valve cam and a cam follower, the push rod being connected to a rocker arm and being pivotable via a rotation axis and acting on a valve actuator bridge at one end, the valve actuator bridge being connected to a respective valve shaft of a respective valve at both ends thereof
**characterized in that**
said rocker arm (2) comprises a retarding device (E) and is directly connected to a clearance compensating telescope device (T) of said push rod (1), and said retarding device (E) comprises fixed lobes (5a, 5b) at the support pin (3) of the rocker arm, said lobes being arranged in lobe chambers (8a, 8b) of said pivotable rocker arm (2), said lobe cams being filled with lubrication oil and being connected to valve units (V, V1) via oil conducting connection conduits (12, 11, 9, 19, 19a) either during opening and closing operation of the inlet valves (7) or the outlet valves or only during closing operation of the inlet valves (7) or the outlet valves.

2. The valve control device according to claim 1, **characterized in that** the lobe chambers (8a, 8b) are connected to a vertical bore (11) in the rocker arm support (B) via a bore (12), wherein a connection bore (9) leads to the vertical bore (11) at one end, the connection bore (9) being connectable to the valve units (V, V1) via two conduits (19, 19a).

3. The valve control device according to claim 2, **characterized in that**, depending on the valve position of the valves (7), the connection bore (9) is connectable to a lubrication oil port (14) via one of said two conduits (19) either via the valve unit (V) consisting of an open/close valve (13) or via the other conduit (19a) of said two conduits having the other valve unit (V1) consisting of a check valve (23) and a restrictor (15).

4. The valve control device according to claim 2, **characterized in that**, depending on the valve position of the valves (7), the connection bore (9) is connectable to a lubrication oil port (14) via one conduit (19) of said two conduits either via the valve unit (V) consisting of a open/close valve (13) or via the other conduit (19a) of said conduits having the other valve unit (V1) consisting of a check valve (23) and a clock operated solenoid on/off valve (15a).

5. The valve control device according to claims 3 or 4, **characterized in that**, during the closing operation of the valves (7), the lubrication oil trapped in the lobe chambers (8a, 8b) is directed to the restrictor (19) or to the clock operated solenoid on/off valve (15a) in the other valve unit (V1) via said bore (12, 11) and the connection bore (9) as well as via the other conduit of said two conduits (19a) in the valve unit (V), when the valve (13) is closed.

6. The valve control device according to one of claims 3 to 5, **characterized in that**, during opening operation of the valves (7), the lubrication oil is directed to the retarding device (E) when the open/close valve (13) in the valve unit (V) is closed, the lubrication oil being directed via said check valve (23) of the other valve unit (V1), one of the two conduits (19), the connection bore (9) and the vertical bore (11) and the bore (12).

7. The valve control device according to one of claims 1 to 6, **characterized in that** the telescope device comprises a spring biased telescope member (21) and **in that** the telescope member (21) is guided in the hollow cylindrical shaft of the push rod (1), and **in that** a compression spring (20) is located between a protruding head of the telescope member (T) and an outer support ring (R) of the cylindrical shaft.

## Revendications

1. Dispositif de commande de soupape variable pour une fermeture retardée de soupapes d'admission ou d'échappement d'un moteur à combustion interne, en particulier pour des moteurs diesel ou à essence, dans lequel le dispositif de commande de soupape comprend une tige de culbuteur actionnée par l'intermédiaire d'une came de soupape et d'un suiveur de came, la tige de culbuteur étant reliée à un culbuteur et pouvant pivoter par rapport à un axe de rotation et agissant sur un pont actionneur de soupape à une extrémité, le pont actionneur de soupape étant relié à un arbre de soupape respectif d'une soupape respective à ses deux extrémités,
**caractérisé en ce que** le culbuteur (2) comprend un dispositif de retard (E) et est directement relié à un dispositif télescopique (T) de compensation de jeu de la tige de culbuteur (1) et le dispositif de retard (E) comprend des lobes fixes (5a, 5b) au niveau de la tige de support (3) du culbuteur, les lobes étant disposés dans des chambres de lobes (8a, 8b) du culbuteur pivotant (2), les cames de lobes étant remplies d'une huile de lubrification et étant connectées à des modules de soupape (V, V1) par l'intermédiaire de conduits de connexion de passage d'huile (12, 11, 9, 19, 19a), ou bien pendant une opération d'ouverture et de fermeture des soupapes d'admission (7) ou des soupapes d'échappement, ou bien pendant l'opération de fermeture des soupapes d'admission (7) ou des soupapes d'échappement.

2. Dispositif de commande de soupape selon la revendication 1, **caractérisé en ce que** les chambres de lobes (8a, 8b) sont connectées à un trou vertical (11) dans le support de culbuteur (B) par l'intermédiaire d'un trou (12), un trou de connexion (9) conduisant au trou vertical (11) à une extrémité, le trou de connexion (9) pouvant être connecté aux modules de soupape (V, V1) par l'intermédiaire de deux conduits (19, 19a).

3. Dispositif de commande de soupape selon la revendication 2, **caractérisé en ce que**, selon la position des soupapes (7), le trou de connexion (9) peut être connecté à un accès d'huile de lubrification (14) par l'intermédiaire de l'un (19) de deux conduits, ou bien par l'intermédiaire du module de soupape (V) consistant à une soupape en tout ou rien (13), ou bien par l'autre (19a) des deux conduits comprenant l'autre module de soupape (V1), consistant en un clapet anti-retour (23) et un élément d'étranglement (15).

4. Dispositif de commande de soupape selon la revendication 2, **caractérisé en ce que**, selon la position des soupapes (7), le trou de connexion (9) peut être connecté à un accès d'huile de lubrification (14) par l'intermédiaire de l'un (19) des deux conduits, ou bien par l'intermédiaire du module de soupape (V) consistant en une soupape en tout ou rien (13), ou bien par l'autre (19a) des conduits comportant l'autre module de soupape (V1) consistant en un clapet anti-retour (23) et une électrovanne commandée par horloge de type en tout ou rien (15a).

5. Dispositif de commande de soupape selon la revendication 3 ou 4, **caractérisé en ce que**, pendant l'opération de fermeture des soupapes (7), l'huile de lubrification piégée dans les chambres de lobes (8a, 8b) est dirigée vers l'élément d'étranglement (15) ou vers l'électrovanne commandée par l'horloge type en tout ou rien (15a) dans l'autre module de soupape (V1) du trou (12, 11) et le trou de connexion (9) ainsi que par l'intermédiaire de l'autre des deux conduits (19a) dans le module de soupape (V), quand la soupape (13) est fermée.

6. Dispositif de commande de soupape selon l'une des revendications 3 à 5, **caractérisé en ce que**, pendant l'opération d'ouverture des soupapes (7), l'huile de lubrification est dirigée vers le dispositif de retard (E) quand la soupape (13) en tout ou rien dans le module de soupape (V) est fermée, l'huile de lubrification étant dirigée par l'intermédiaire du clapet anti-retour (23) de l'autre module de soupape (V1), de l'un des deux conduits (19), du trou de connexion (9) et du trou vertical (11) et du trou (12).

7. Dispositif de commande de soupape selon l'une des revendications 1 à 6, **caractérisé en ce que** le dispositif télescopique comprend un élément télescopique sollicité par ressort (21) et **en ce que** l'élément télescopique (21) est guidé dans l'arbre cylindrique creux de la tige de culbuteur (1), et **en ce qu'**un ressort de compression (20) est disposé entre une tête en saillie de l'élément télescopique (T) et une bague support externe (R) de l'arbre cylindrique.
